## Europäisches Patentamt

## European Patent Office

## Office européen des brevets

(19)

(11) Veröffentlichungsnummer: **0 048 720**
**B1**

(12) # EUROPÄISCHE PATENTSCHRIFT

(45) Veröffentlichungstag der Patentschrift:
**11.07.84**

(51) Int. Cl.³: **B 60 C 23/00,** B 60 C 29/00

(21) Anmeldenummer: **81900656.0**

(22) Anmeldetag: **26.03.81**

(86) Internationale Anmeldenummer:
**PCT/CH 81/00034**

(87) Internationale Veröffentlichungsnummer:
**WO 81/02869 (15.10.81** Gazette **81/24)**

(54) Einrichtung zum Überwachen des Luftdruckes in mindestens einem Luftreifen eines Fahrzeuges.

(30) Priorität: **03.04.80 CH 2643/80**

(43) Veröffentlichungstag der Anmeldung:
**07.04.82 Patentblatt 82/14**

(45) Bekanntmachung des Hinweises auf die Patenterteilung:
**11.07.84 Patentblatt 84/28**

(84) Benannte Vertragsstaaten:
**AT CH DE FR GB LI NL SE**

(56) Entgegenhaltungen:
**CH - A - 341 041**
**DE - A - 2 822 514**
**US - A - 4 210 174**

(73) Patentinhaber: **Etter-Felix, Hansruedi,**
**Mooswiesenstrasse 4, CH-9322 Egnach (CH)**

(72) Erfinder: **Etter-Felix, Hansruedi, Mooswiesenstrasse 4,**
**CH-9322 Egnach (CH)**

(74) Vertreter: **Schmauder, Klaus Dieter et al, c/o Schmauder**
**& Wann Patentanwaltsbüro Nidelbadstrasse 75,**
**CH-8038 Zürich (CH)**

## Beschreibung

Die Erfindung betrifft eine Einrichtung gemäss Oberbegriff des Anspruches 1.

Eine Einrichtung der eingangs genannten Art ist beispielsweise aus der DE-OS 2822514 bekannt. In einer solchen Einrichtung soll das Ventilglied bei einem bestimmten höheren Druck öffnen und bei einem bestimmten niederen Druck schliessen. Dabei ist es nachteilig, dass es bei kleinen Drücken und kleinen Druckdifferenzen des Offenhalte- und des Schliessdruckes Ungenauigkeiten und eine gewisse Streuung der Ansprechbarkeit aufweist.

Aus der DE-PS 1048452 ist ein Rückschlag- oder Überdruckventil bekannt, bei dem anstelle einer Vorspannfeder ein Dauermagnet zur Erzielung der Rückstellkraft verwendet wird. Dieses Ventil funktioniert praktisch nur in ruhender aufrechtstehender Stellung, andernfalls kann sich der Magnet aus dem Wirkungsfeld des Gehäuses bewegen und wird unwirksam. Ausserdem ist dieses Ventil äusserst empfindlich gegen Erschütterungen, die ein ungewolltes Schliessen verursachen können. Dieses Ventil ist zum Überwachen von Luftbereifungen eines Fahrzeuges völlig ungeeignet.

Aufgabe der Erfindung ist es, die Ansprechgenauigkeit der eingangs genannten Einrichtung zu verbessern, dies insbesondere auch bei kleineren Drücken und kleineren Differenzen des Offenhalte- und des Schliessdruckes. Diese Aufgabe wird durch die kennzeichnenden Merkmale des Anspruches 1 gelöst.

Sobald das Ventilglied bei absinkendem Druck anzusprechen, d.h. zu schliessen beginnt, verstärkt sich die Anziehung zwischen dem Magneten und dem ferromagnetischen Anschlag. Sobald die durch die Schliessbewegung des Ventilgliedes bedingte Abnahme der Vorspannkraft der Feder durch die Zunahme der Vorspannkraft des Magneten kompensiert bzw. übertroffen wird, erfolgt ein schlagartiges Schliessen. Dadurch lässt sich ein präzises Schliessen auch bei geringen Drücken und geringen Druckdifferenzen erzielen. Die bei offenem Ventil erhöhte Vorspannkraft der Feder und der praktisch fehlende Einfluss des Magneten gewährleistet ein sicheres Offenhalten des Ventiles in allen Stellungen des Ventils und auch bei extremen Erschütterungen, so wie dies beispielsweise beim Einsatz des Ventils zur Überwachung von Luftreifen von Fahrzeugen der Fall ist.

Vorteilhafte Weiterbildungen der Einrichtung sind in den Ansprüchen 2 bis 8 umschrieben.

Die Ausgestaltung des Ventils nach Anspruch 2 ermöglicht es, die Ansprechempfindlichkeit und/ oder die Höhe des Ansprechdruckes einzustellen. In den Ansprüchen 3 bis 5 sind verschiedene vorteilhafte Möglichkeiten der Einstellbarkeit umschrieben.

Der Magnet kann ein Elektromagnet sein, vorzugsweise ist er jedoch ein Permanentmagnet. In letzterem Falle ist eine Ausgestaltung nach Anspruch 6 von besonderem Vorteil.

Eine Ausbildung nach Anspruch 7 erhöht die Stabilität und Lebensdauer der Einrichtung.

Besonders vorteilhaft ist die Ausbildung der Einrichtung gemäss Anspruch 8 zum zusätzlichen Ausgleichen des Druckes in zwei Luftreifen.

Ein Ausführungsbeispiel der erfindungsgemässen Einrichtung zum Ausgleichen und Überwachen des Druckes in mindestens zwei Luftreifen eines Fahrzeuges wird nachfolgend anhand der Zeichnung näher beschrieben. Dabei zeigen:

Fig. 1 die Einrichtung im Längsschnitt;

Fig. 2 die Einrichtung der Figur 1 im Grundriss;

Fig. 3 das Detail der Figur 1 in grösserem Massstab.

Die in den Figuren gezeigte, mit einem Ventil ausgerüstete Einrichtung dient zum Ausgleichen und Überwachen des Druckes in mindestens zwei Luftreifen eines Fahrzeuges. Die Einrichtung weist eine Druckkammer 1 auf, deren eine Wandung durch ein Ventilglied 2 gebildet ist, welches mittels einer Vorspannfeder 3 gegen einen Ventilsitz 4 vorgespannt ist. In die Druckkammer 1 mündet eine Zuleitung 5, die mittels eines Rückschlagventils 6 absperrbar ist. Verbindungskanäle 7 und 8 dienen zum Anschluss der nicht dargestellten Druckräume, die beispielsweise Luftreifen von Fahrzeugen sind. Die Verbindungskanäle 7 und 8 münden jeweils in den Ventilsitz 4. Die der Druckkammer zugewandte freie Fläche des Ventilgliedes ist wesentlich grösser als die Summe der Querschnittsflächen der Mündungsöffnungen 9 und 10 der Verbindungskanäle 7 und 8.

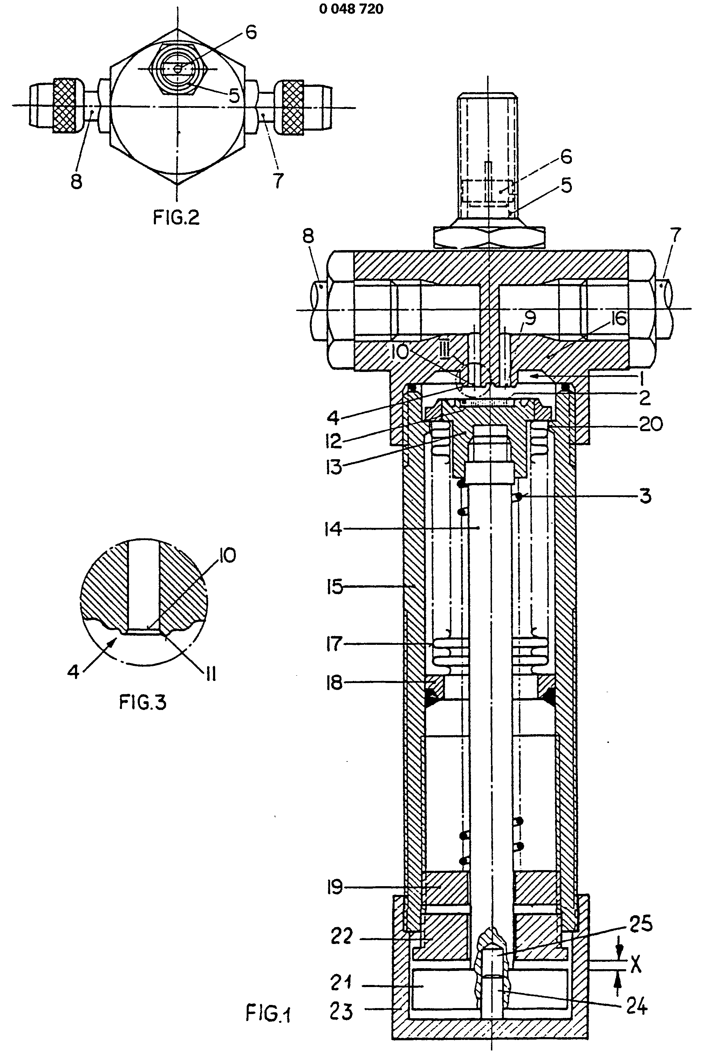

Wie insbesondere aus Figur 3 hervorgeht, sind die Mündungsöffnungen 9 und 10 mit Dichtlippen 11 versehen, die gegen das Ventilglied 2 weisen. Das Ventilglied 2 ist mit einer den Dichtlippen 11 zugewandten Dichtung 12 ausgestattet, die aus einem elastischen Material besteht, das durch die Dichtlippen verdrängbar ist, so dass ein sicherer Abschluss zwischen dem Ventilglied und den Mündungsöffnungen gewährleistet ist.

Im vorliegenden Ausführungsbeispiel wird das Ventilglied 2 durch einen Kolben 13 gebildet, der an einer Stange 14 befestigt und fliegend gelagert ist. Der Kolben 13 ist in einem als Zylinder ausgebildeten Gehäuse 15 angeordnet, dessen Boden 16 in zwei Bereiche aufgeteilt ist, wobei ein erster Bodenbereich den Ventilsitz 4 bildet und ein zweiter Bodenbereich einen Wandungsteil der Druckkammer 1. Zur Abdichtung des Kolben 13 gegenüber der Zylinderwand dient eine als Wellrohr 17 ausgebildete Manschette, die einerseits an dem Kolben 13 und andererseits über einen Innenring 18 an der Zylinderwand mediumsdicht angeordnet ist. Die Vorspannfeder 3 dient zum Vorspannen des Kolbens 13 gegen den Ventilsitz 4. Mittels einer in das Gehäuse 15 eingeschraubten Stellschraube 19 kann die Vorspannkraft der Vorspannfeder eingestellt werden. Die Öffnungsbewegung des Kolbens 13 und damit des Ventilgliedes wird durch einen Anschlag 20 begrenzt, der gegebenenfalls einstellbar ist.

An dem dem Ventilglied 2 abgewandten Ende der Stange 14 ist ein als Topfmagnet ausgebildeter Permanentmagnet 21 befestigt, der mit einem ferromagnetischen Anschlag 22 zusammenwirkt. Dieser ist in Form eines Ringes in das Gehäuse 15 eingeschraubt. Je nach Einschraubtiefe kann der Abstand X zwischen dem Permanentmagnet 21 und dem ferromagnetischen Anschlag 22 bei geöffnetem Ventilglied 2 eingestellt werden. Eine Verschlusskappe 23 ist auf das Ende des Gehäuses 15 aufgeschraubt und deckt die Einrichtung vollständig dicht ab.

Die Verschlusskappe 23 kann mit einem Zapfen 24 versehen sein, der in eine Bohrung 25 der Stange 14 eingreift und zur Führung der Stange 14 dient. Die Verschlusskappe kann aus transparentem Material bestehen, um die Stellung des Permanentmagneten 21 und damit den Schaltzustand des Ventils optisch feststellen zu können.

Zur Verstellung des Abstandes X kann gegebenenfalls auch der ferromagnetische Anschlag 22 feststehend angeordnet sein und der Permanentmagnet 21 auf der Stange 14 in achsialer Richtung verschraubbar ausgebildet sein. Auch wäre es denkbar, den Anschlag 20 verstellbar auszubilden, um den Abstand X zu verändern.

Zum Ausgleichen und zur Überwachung des Druckes in der Luftbereifung eines Fahrzeuges kann die Einrichtung beispielsweise wie folgt ausgelegt sein. Soll der Nenndruck in einem Reifen beispielsweise 8 bar betragen, so öffnet das Ventilglied 2, wenn an der Zuleitung 5 mindestens ein Druck von 9 bar angelegt wird. Das Ventilglied 2 schliesst, sobald der Druck in der Druckkammer 1 unter 7,5 bar sinkt. Sind nun die Luftreifen über die Zuleitung 5, die Druckkammer 1 und die Verbindungskanäle 7 und 8 auf den Nenndruck von 8 bar aufgepumpt, so bleibt also das Ventilglied 2 offen. Sinkt nun der Druck in einem der Luftreifen, so bleibt das Ventilglied 2 offen und es kann ein Druckausgleich von einem Verbindungskanal über die Druckkammer in den anderen Verbindungskanal stattfinden. Erst wenn der Gesamtdruck unter den Nenndruck im vorliegenden Beispiel unter 8 bar sinkt, beginnt das Ventilglied 2 zu schliessen. In der ersten Phase wirkt nur die Vorspannkraft der Vorspannfeder 3 und die Stange 14 mit dem Ventilglied 2 wird gegen den Ventilsitz 4 bewegt. Nach etwa 1 mm Federweg wird in einer zweiten Phase der Einfluss des Permanentmagneten 21 und des Anschlages 22 wirksam und das Ventil schliesst ruckartig. In der ersten Phase ist der Abstand X so gross, dass der Permanentmagnet 21 unwirksam ist. So besteht keine Gefahr, dass — ohne Druckverlust in der Druckkammer 1 — bei einem eventuellen Schlag ein selbsttätiges Schliessen des Ventils erfolgt und dies unabhängig von der Lage des Ventils.

Ist das Ventilglied 2 geschlossen und steigt der Druck in einem der Luftreifen, beispielsweise durch übermässige Erwärmung, wieder an, so kann dieser Druckanstieg das Ventilglied 2 nicht öffnen, da der durch den Öffnungsquerschnitt der Mündungsöffnung an das Ventilglied 2 angelegte Druck sich nur auf eine Fläche des Ventilgliedes 2 auswirkt, die dem Querschnitt der Mündungsöffnung entspricht. Dieser Druck reicht, selbst wenn er beträchtlich höher ist als der Nenndruck des Reifens, nicht aus, um das Ventilglied zu öffnen. Damit ist sichergestellt, dass ein einmal geschlossenes Ventilglied 2 durch einen Überdruck in den angeschlossenen Druckräumen nicht geöffnet werden kann, sondern erst durch erneute Zufuhr von Druckmittel über die Zuleitung 5.

Bei einem plötzlichen Druckabfall in einem der Druckräume schliesst das Ventilglied 2 selbst bei Überdruck sofort.

Die Einrichtung ist beispielsweise auch für Drücke von 2 bis 5 bar geeignet.

Im Gegensatz zum dargestellten Ausführungsbeispiel sind noch verschiedene andere Ausgestaltungen der Einrichtung möglich. Insbesondere kann das Ventilglied auch als Membrane ausgebildet sein, die zwischen den Wandungen einer Druckkammer eingespannt ist.

## Patentansprüche

1. Einrichtung zum Überwachen des Luftdruckes in mindestens einem Luftreifen eines Fahrzeuges, mit einem Gehäuse (15), welches eine mit einer absperrbaren Zuleitung (5) versehene Druckkammer (1) aufweist, die teilweise durch einen einen Ventilsitz (4) aufweisenden Boden des Gehäuses (15) und eine Fläche eines Ventilgliedes (2) begrenzt ist, welches mittels einer Vorspannfeder (3) gegen den Ventilsitz (4) vorgespannt ist, in welchem der Verbindungskanal (7, 8) mindestens eines Luftreifens mündet, wobei weiter die der Druckkammer (1) zugewandte freie Fläche des Ventilgliedes (2) beim Aufsitzen auf dem Ventilsitz (4) stets grösser ist als die Querschnittsfläche der Mündung des Verbindungskanals (7, 8), sowie mit einer Anzeigevorrichtung (21, 23) zum Anzeigen des Schaltzustandes des Ventilgliedes, dadurch gekennzeichnet, dass das Ventilglied (2) oder das Gehäuse (15) mit einem Magneten (21) versehen ist, der mit einem ferromagnetischen Anschlag (22) am Gehäuse (15) oder Ventilglied (2) zusammenwirkt, derart, dass der Magnet (4) bei geschlossenem Ventilglied (2) mindestens annähernd an dem ferromagnetischen Anschlag (22) ansteht und bei geöffnetem Ventilglied (2) einen Abstand (X) von diesem aufweist, bei dem die Vorspannkraft des Magneten (21) kleiner ist als die Vorspannkraft der Feder (3).

2. Einrichtung nach Anspruch 1, dadurch gekennzeichnet, dass der Abstand (X) zwischen dem ferromagnetischen Anschlag (22) und dem Magneten (21) einstellbar ist.

3. Einrichtung nach Anspruch 2, dadurch gekennzeichnet, dass der ferromagnetische Anschlag (22) verstellbar ist.

4. Einrichtung nach Anspruch 2, dadurch gekennzeichnet, dass der Magnet (21) verstellbar ist.

5. Einrichtung nach Anspruch 2, dadurch gekennzeichnet, dass der Anschlag (20) des Ventilgliedes (2) verstellbar ist.

6. Einrichtung nach Anspruch 1, dadurch gekennzeichnet, dass der Magnet (21) ein an einer Stange (14) des Ventilgliedes (2) angeordneter Topfmagnet ist, der mit einem ferromagnetischen Anschlag (22) am Gehäuse (15) zusammenwirkt.

7. Einrichtung nach Anspruch 6, dadurch gekennzeichnet, dass die Stange (14) am magnetseitigen Ende mit einer Längsführung (24, 25) versehen ist.

8. Einrichtung nach Anspruch 1, dadurch gekennzeichnet, dass zum zusätlichen Ausgleichen des Druckes zwischen zwei Luftreifen eines Fahrzeuges beide Verbindungskanäle (7, 8) der Luftreifen in den Ventilsitz (4) münden und mittels des Ventilgliedes (2) verschliessbar sind, wobei die Summe der Querschnittsflächen der Mündungsöffnungen (9, 10) beider Verbindungskanäle (7, 8) kleiner ist als die der Druckkammer (1) zugewandte freie Fläche des Ventilgliedes (2).

## Claims

1. A mechanism for monitoring the air pressure in at least one pneumatic tyre of a vehicle, comprising a housing (15) having a pressure chamber (1) which is provided with a supply pipe (5), which can be shut off and which is bounded partially by a base, having a valve seat (4), of the housing (15) and a surface of a valve element (2) which is biassed by means of a biassing spring (3) against the valve seat (4) into which a connecting passage (7, 8) of at least one pneumatic tyre opens out, in which respect furthermore the free surface, facing the pressure chamber (1), of the valve element (2) when seated on the valve seat (4) is at all times greater than the cross-sectional area of the mouth of the connecting passage (7, 8) said mechanism also comprising an indicating device (21, 23) for indicating the switching state of the valve element, characterised in that the valve element (2) or the housing (15) is provided with a magnet (21) which co-operates with a ferromagnetic stop (22) on the housing (15) or valve element (2), in such a way that the magnet (4), when the valve element (2) is closed, is at least approximately contiguous to the ferromagnetic stop (22) and, when the valve element (2) is opened, is at a distance (X) from this, in which case the biassing force of the magnet (21) is smaller than the biassing force of the spring (3).

2. A mechanism according to claim 1, characterised in that the distance (X) between the ferromagnetic stop (22) and the magnet (21) is adjustable.

3. A mechanism according to claim 2, characterised in that the ferromagnetic stop (22) is adjustable.

4. A mechanism according to claim 2, characterised in that the magnet (21) is adjustable.

5. A mechanism according to claim 2, characterised in that the stop (20) of the valve element (2) is adjustable.

6. A mechanism according to claim 1, characterised in that the magnet (21) is a pot-shaped magnet which is arranged on a rod (14) of the valve element (2) and which co-operates with a ferromagnetic stop (22) on the housing (15).

7. A mechanism according to claim 6, characterised in that the rod (14) is provided on the magnet-side end with a longitudinal guide (24, 25).

8. A mechanism according to claim 1, characterised in that, for the additional compensation of the pressure between two pneumatic tyres of a vehicle, both connecting passages (7, 8) of the pneumatic tyres open out into the valve seat and are sealable by means of the valve element (2), in which respect the sum of the cross-sectional areas of the mouth apertures (9, 10) of the two connecting passages (7, 8) is smaller than the free area, facing the pressure chamber (1), of the valve element (2).

## Revendications

1. Dispositif de contrôle de la pression de l'air dans au moins un pneumatique d'un véhicule, comprenant une enveloppe (15) qui présente une chambre de pression (1) pourvue d'un conduit (5) pouvant être obturé et limitée partiellement par un fond de l'enveloppe (15) présentant un siège de valve (4) et par une surface d'un obturateur de valve (2) qui, au moyen d'un ressort (3), est sollicité contre le siège (4) dans lequel débouche le canal de liaison (7, 8) d'au moins un pneumatique, la surface libre de l'obturateur (2) tournée vers la chambre de pression (1) étant en outre, lors de l'application sur le siège (4), toujours plus grande que l'aire de la section de l'embouchure du canal de liaison (7, 8), ainsi qu'un dispositif indicateur (21, 23) pour indiquer l'état de commutation de l'obturateur, caractérisé en ce que l'obturateur (2) ou l'enveloppe (15) est pourvu d'un aimant (21) qui coopère avec une butée ferromagnétique (22) de l'enveloppe (15) ou de l'obturateur (2), de telle façon que, lorsque l'obturateur (2) est fermé, l'aimant (4) est placé au contact ou au moins très près de la butée ferromagnétique (22), et que lorsque l'obturateur (2) est ouvert, il en est éloigné d'un intervalle (X), pour lequel la force de sollicitation de l'aimant (21) est inférieure à la force de sollicitation du ressort (3).

2. Dispositif selon la revendication 1, caractérisé en ce que l'intervalle (X) entre la butée ferromagnétique (22) et l'aimant (21) est réglable.

3. Dispositif selon la revendication 2, caractérisé en ce que la butée ferromagnétique (22) est déplaçable.

4. Dispositif selon la revendication 2, caractérisé en ce que l'aimant (21) est déplaçable.

5. Dispositif selon la revendication 2, caractérisé en ce que la butée (20) de l'obturateur (2) est déplaçable.

6. Dispositif selon la revendication 1, caractérisé en ce que l'aimant (21) est constitué par un aimant cuirassé qui est monté sur une tige (14) de l'obturateur (2) et qui coopère avec une butée ferromagnétique (22) prévue sur l'enveloppe (15).

7. Dispositif selon la revendication 6, caractérisé en ce que la tige (14) est pourvue, à son extrémité voisine de l'aimant, d'un guide longitudinal (24, 25).

8. Dispositif selon la revendication 1, caractérisé en ce que, pour l'égalisation auxiliaire de la pression entre deux pneumatiques d'un véhicule, les deux canaux de liaison (7, 8) des pneumatiques débouchent dans le siège (4) et peuvent être fermés au moyen de l'obturateur (2), la disposition étant telle que la somme des aires des sections des ouvertures des embouchures (9, 10) des deux canaux de liaison (7, 8) est plus petite que l'aire de la surface libre de l'obturateur (2) tournée vers la chambre de pression (1).

FIG.2

FIG.3

FIG.1

7